# EUROPÄISCHE PATENTANMELDUNG

(11) **EP 4 215 827 A1**
(43) Veröffentlichungstag der Anmeldung: **26.07.2023**
(21) Anmeldenummer: 23151818.4
(22) Anmeldetag: 16.01.2023
(51) Int. Cl.: F24F 1/03, F24F 5/00

(54) **AUSSENWAND-TERMPERIERUNGSEINHEIT**

(30) Priorität: 21.01.2022 DE 202022000161 U
(71) Anmelder: CONSOLAR Solare Energiesysteme GmbH, 60486 Frankfurt am Main (DE)
(72) Erfinder: LEIBFRIED, Ulrich, 79539 Lörrach (DE)
(74) Vertreter: Huwer, Andreas

(57) **Zusammenfassung**

Aufgabenstellung der Erfindung ist es, ein System darzustellen, das die gleichzeitige Sanierung von Gebäudehülle und Wärmeerzeuger ermöglicht, ohne größere Arbeiten im Inneren des Gebäudes. Das System soll den effizienten Einsatz von Wärmepumpentechnologie ermöglichen und auch von umgeschulten bzw. angelernten Kräften fehlerfrei eingesetzt werden können.

Die Aufgabenstellung wird durch in Serie gefertigte Temperierungseinheiten gelöst, die kombiniert mit Wanddämmung außen auf die Fassade aufgebracht werden. Die Temperierungseinheiten stellen eine Wärmepumpe dar: im Heizfall befindet sich die Kondensatorfläche zur Wärmeabgabe auf der Innenseite - zur Gebäudewand hin - die Verdampferfläche befindet sich auf der Außenseite zur Umgebungsluft und Sonne hin. Zuluft für die beheizten bzw. gekühlten Räume des Gebäudes kann durch die Temperierungseinheiten geführt und erwärmt bzw. im Kühlbetrieb abgekühlt werden, bevor sie in die Räume strömt.

## Beschreibung

Die Erfindung betrifft Systeme zur Reduzierung und Deckung des Heiz- und Kühlbedarfs von Gebäuden. Eine der größten Herausforderungen zur Meisterung der Klimakrise in den industrialisierten Ländern ist der Umbau des Gebäudesektors zu klimaneutralem Heizen und Kühlen. Hierzu muss der Gebäudebestand sowohl hinsichtlich des Energieverbrauchs (Gebäudehülle) als auch der Wärmeerzeugung saniert und dekarbonisiert werden, was Sanierungsraten erfordert, die mit den heutigen Möglichkeiten nicht vorstellbar erscheinen. Ein großes Hindernis dabei ist, dass beide Investitionen i. d. R. zusammen getätigt werden müssen, und dass sie sowohl Arbeiten an der Gebäudehülle (Dämmung) als auch in den Wohn- bzw. Nutzräumen (Heizungs- und ggf. Kühlflächen) betreffen. Heizsysteme ohne Verbrennung fossiler Energieträger beruhen i. d. R. auf Wärmepumpen, die Niedertemperatur-Heizflächen (Fußboden-, Wand- oder Deckenheizungen) benötigen.

Der Ansatz der Erfindung beruht darauf, dass die Energiezu- oder abfuhr zum/vom Gebäude über die Außenwand erfolgt. In einem von Ottensmeier Ingenieure realisierten Konzept fungiert die Fassade als Pufferspeicher für Wärme und Kälte, die durch einen an der Außenfassade angebrachten Wärmetauscher aktiviert werden. In einer Installationsebene zwischen Hauswand und Dämmung werden Flächenheizungselemente mit mäanderförmig verlegten Rohren montiert, die für eine angenehme Grundtemperatur im gesamten Haus sorgen. Das System wird im Sommer zum Kühlen genutzt. https://www.owl-morgen.de/schaufenster/ottensmeieringenieure/

Im Projekt Im Projekt LEXU II (Low Exergy Utilisation) wurden an die unisolierte Fassade eines Gebäudes Kapillarrohrmatten in Putz verlegt, und anschließend eine Dämmung von außen aufgetragen. Die Flächenheizung sorgte auch "von au-ßen" mit geringen Vorlauftemperaturen für ein gutes Heizergebnis. Um Wärmeverluste an der Außenwand auszugleichen, reichten bereits Vorlauftemperaturen knapp über der Ruhetemperatur der Wand in der Heizebene. https://www.energie-wendebauen.de/projekt/gebaeudesanierung-mit-aussen-liegender-wandheizung/, https://core.ac.uk/download/pdf/162022157.pdf

In der DE102010045354 wird ebenfalls ein Aktivfassadensystem vorgeschlagen: Zwischen der Außenwand eines Gebäudes und einer außenliegenden Dämmschicht ist ein Röhrensystem angeordnet mit einem erwärmbaren, Frostschutzmittel enthaltenden Medium gefüllt, mit dem die Innenräume des Gebäudes temperiert werden können und der Energieabfluss nach außen weitgehend vermieden wird.

Die beschriebenen Systeme haben mehrere Nachteile, u. a.:
- Es handelt sich um wasser- bzw. flüssigkeitsführende Systeme mit entsprechend hohem Installations- und ggf. Wartungsaufwand (z. B. großer Aufwand und Schaden bei Leckage innerhalb der Wand).
- Eine individuell regelte Beheizung einzelner Flächen ist nur mit größerem hydraulischem Aufwand möglich und dann nicht mehr im Falle anderer Raumnutzungen änderbar.

Die DE102013021773A1 beschreibt eine Vorrichtung mit zentraler Wärmepumpe und flüssigkeitsgebundenem Wärmetransport, siehe [0035]: ... "Pumpen", [0036] ... "wärmeträgerführender Aktivierungsschicht" und [0037] ... "hydraulisch koppelbar". Damit sind die oben beschriebenen Nachteile verbunden.

In der DE2707826A1 wird eine Anordnung beschrieben, bei der ein Wärmeaustauscher auf der Innenseite einer Außenwand zum Heizen angebracht ist (wie eine Wandheizung), dahinter befindet sich eine Dämmung und wiederum dahinter, zwischen Dämmung und Außenwand, ein weiterer Wärmeaustauscher, der durch seine tiefere Temperatur Wärme aufnimmt und einer Wärmepumpe zur Verfügung stellt. Die Anordnung ist mit einem Zwischen- und einem Langzeitspeicher verbunden.

Der Nachteil dieses Systems, neben den oben genannten ist, dass im Sanierungsfall große Arbeiten in den Innenräumen durchgeführt werden müssen, dass der Wohnraum reduziert wird, die Speichermasse der Außenwände nicht genutzt wird und stattdessen weitere Speicher benötigt werden.

Es gibt unterschiedliche Konzepte und Projekte mit vorgefertigten Fassadenelementen, die Haustechnik insbesondere zum Heizen enthalten:
Im Projekt "MultiTAB-Multifunktionale Nutzung thermisch aktivierter Fassaden" wird die intensive Nutzung von thermisch aktivierten Bestandswänden als zusätzlicher thermischer Speicher und alleiniges und damit kostenoptimiertes Wärmeabgabesystem unter vorrangigem Einsatz von Solartechnologien (Solarthermie bzw. PV) untersucht. Im zugrundeliegenden Konzept wird eine aktive Wärmeübertragungsebene, also eine Flächenheizung, in eine vorgefertigte Vorhangfassade mit Dämmung integriert, um eine thermische Beladung der massiven Außenwände von der Außenseite des Gebäudes zu erreichen, vgl. Energieaktive Fassaden - Entwicklung multifunktionaler Fassaden zur thermischen Bauteilaktivierung UND Solarthermische Wärmeerzeugung mit Fassadenmodulen aus Profilbaugläsern: Thomas Ramschak, AEE INTEC, Gleisdorf, Österreich und Maik Kirchner, ISFH, Emmerthal - Symposium Solarthermie und innovative Wärmesysteme, 12. - 14. Mai 2020, Bad Staffelstein.

Die österreichischen Unternehmen GAP-Solution GmbH und die Kulmer Holz-Leimbau GesmbH bieten Energieaktive Vorhangfassaden in der Bestandssanierung an. Es handelt sich um rein passiv wirkende Solar-Wabenpaneele (transparente Wärmedämmung) mit der äußersten Schicht aus Sicherheitsglas. https://www.aee.at/energieaktive-fassaden/95-zeitschrift/zeitschriften/2019-02-energieaktive-fassaden/1119-energieaktive-vorhangfassaden-in-der-bestandssanierung

Weiterhin gibt es mehrere Projekte und Realisationen für serielles Sanieren, bei dem die Dämmelemente (Fassade, Dach) und die Solarmodule für das zu sanierende Gebäude nach digitaler Datenaufnahme im Werk vorgefertigt und dann innerhalb kurzer Zeit am Haus angebracht werden, siehe:
www.energiesprong.de
https://northsearegion.eu/indu-zero/videospodcast/
https://rcpanels.nl/
ecoworks.tech

In der US1975859 wird eine in die Wand integrierte Wärmepumpe zum Kühlen mit abgekühlter Luft beschrieben. Die gesamte Einheit ersetzt die Wand an dieser Stelle. Je ein Gebläse ist vorgesehen: sowohl für Außenluft, an die Abwärme abgegeben wird, als auch für Innenluft zum Kühlen.

Da die Einheit die Wand ersetzt, kann sie nicht zur Sanierung verwendet werden. Eine kombinierte Dämmfunktion ist nicht vorgesehen, so dass über die unisolierte Einheit hohe Wärme- bzw. Kältverluste entstehen. Ein weiterer Nachteil ist, dass die Einheiten Gebläse beinhalten, die sowohl bzgl. Geräusch als auch Störungs- und Wartungsanfälligkeit nachteilig sind.

Die in der US4505328A beschriebene Vorrichtung ist im Prinzip sehr ähnlich wie die US1975859: sie ist ebenfalls in die Wand integriert und auch mit Gebläsen auf beiden Seiten ausgestattet, in diesem Fall auch zum Heizen. Die oben aufgeführten Nachteile treffen auch hier zu.

Die WO2020/016686 bzw. IT201800007358 geht von einer baulichen Struktur bzw. einem Gebäude aus, deren Außenfläche aus modularen Wandelementen besteht. Diese beinhalten innerhalb eines Gehäuses (*casing (200)*) eine Wärmepumpe mit einer wärmeabgebenden oder aufnehmenden Fläche zur Gebäudeinnenseite und einer wärmeaufnehmenden oder abgebenden Fläche nach außen sowie Wärmedämmung dazwischen. Es wird keine Flüssigkeit für Transport und Verteilung der Wärme benötigt.

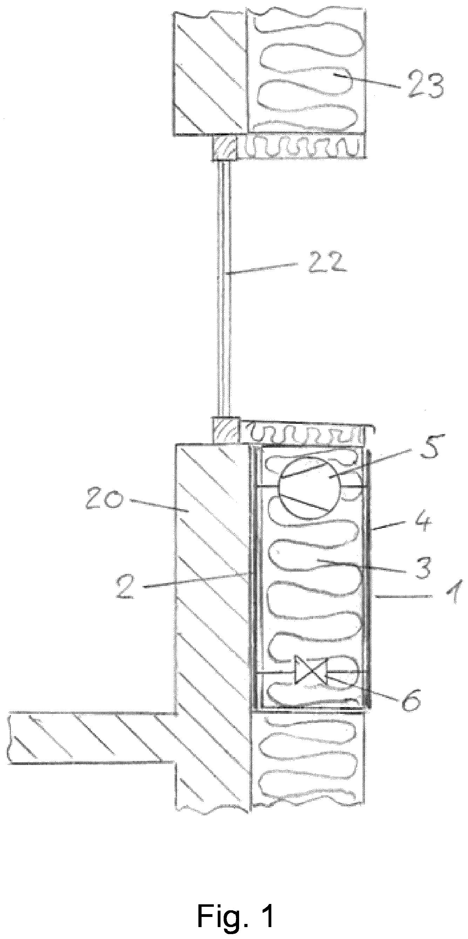

Die Nachteile dieser Vorrichtung, insbesondere falls sie zur Sanierung von Gebäuden genutzt werden soll, d. h. wenn die Wandelemente auf die bestehende Wand eines zu sanierenden Gebäudes aufgebracht werden sollen, sind:
1. Die Wärmeübertragung in das Gebäude bzw. zum Innenraum findet ausschließlich über die von außen aufgeheizte Wand und Wärmeleitung durch die Wand statt. Dies limitiert die übertragbare Leistung deutlich. Bei bestehenden Gebäuden mit Außenwänden mit einer gewissen Dämmwirkung und Luftwechsel ohne Wärmerückgewinnung müsste die Heiztemperatur sehr hoch sein, um die benötigte Heizleistung zu übertragen, was zu einem hohen Stromverbrauch führen oder auch die maximal mögliche Temperaturspreizung zwischen Wärmequelle und -senke überschreiten würde.
2. Im Kühlfall ist die Kühlleistung begrenzt, weil ansonsten Feuchte durch Kondensation innerhalb der Wände auftreten und Bauschäden verursachen könnte.
3. Bei massiven Wänden, wie es bei zu sanierenden Gebäuden oft der Fall ist, führt die ausschließliche Wärmeübertragung durch die Wand zu einer hohen Trägheit mit ggf. negativen Auswirkungen auf den Komfort oder die Effizienz.
4. Die Wärmeübertragung auf der Außenseite zur Umgebungsluft findet ausschließlich über die Außenoberfläche der flachen äußeren Verdampfer-/ Kondensatorfläche statt, z. B. eine im Rollbondverfahren hergestellte Platte (S. 6, Zeile 7-10). Dies limitiert die übertragbare Leistung deutlich, nur Gebäude mit geringem Wärmebedarf können auf diese Weise vollständig versorgt werden.
5. Die Wandelemente grenzen gemäß Anspruch 9 und Figur 1 direkt aneinander, so dass sie die Außenfläche des Gebäudes komplett bedecken. Die vollständige Bedeckung der Außenwand schränkt aber die breite und serielle Anwendung stark ein, denn die Wandelemente müssen für jedes Gebäude auf Maß angefertigt werden. Dies führt umso mehr bei Verwendung von Photovoltaikmodulen als Außenfläche der Wandelemente zu hohen Kosten. Würden dagegen die Außenflächen nicht komplett beheizt bzw. gekühlt, wäre die Auswirkung der Limitierungen der äußeren und inneren Wärmeübertragung noch größer, d. h., die Anwendung der Wandelemente für Sanierungsfälle wäre in vielen Fällen nicht möglich.
6. Die vollständige Bedeckung der Außenfläche mit den Wandelementen führt bei Mehrfamilienhäusern in den meisten Fällen zu einer Überlappung der Elemente zwischen unterschiedlichen Wohnungen. Die getrennte Beheizung und damit auch die vereinfachte Abrechnung der Heizkosten durch einzelne Stromanschlüsse pro Wohnung ist damit i. d. R. nicht möglich.
7. Es gibt keinen Lösungsansatz für Fälle, bei denen die Außenwand des Gebäudes nicht geeignet ist, Solarstrahlung aufzunehmen oder der Austausch der Außenluft behindert ist, z. B. die Gebäudewand hinter Balkonen.
8. Es gibt keinen Lösungsansatz, wie die innere Wärmeübertragungsfläche in guten thermischen Kontakt zu einer bestehenden Wand gebracht werden kann.
9. Es wird ein vorzugsweise metallisches Gehäuse verwendet, vorzugsweise aus Aluminiumblech, siehe S. 3, Zeile 13-14: "The casing 200 is typically made of metal, advantageously it is made of aluminium sheet metal.", das Wärmeleitung zwischen Innen und Außen verursacht. Ein weiterer Nachteil eines solchen Gehäuses ist, dass es das Gewicht und die Kosten der Elemente erhöht.
10. Die Montage der Wärmepumpe und das Einbringen der Isolation innerhalb des Gehäuses, z. B. Polyurethanschaum, bei gleichzeitiger Wartungszugänglichkeit der Komponenten ist ähnlich aufwändig wie bei einer herkömmlichen Wärmepumpe, wirkt sich aber aufgrund der Vielzahl der benötigten Wandelemente ungünstig auf die Kosten aus.

Aufgabenstellung der Erfindung ist es, ein System darzustellen, bei dem die Sanierung von Gebäudehülle und Wärmeerzeuger gleichzeitig erfolgen kann, ohne größere Arbeiten im Inneren des Gebäudes und ohne die Nutzung des Gebäudes im Inneren stärker zu beeinträchtigen. U. a. soll das bisherige Heizsystem so lange in Betrieb bleiben können, bis die Sanierung abgeschlossen ist.

Das System soll den effizienten Einsatz von Wärmepumpentechnologie ermöglichen. Dabei soll es auch von angelernten Kräften ohne spezielle Heizungstechnik-Ausbildung fehlerfrei eingesetzt werden können. Insbesondere wasserbasierte Heizsysteme, die neben der korrekten Verlegung einen hydraulischen Abgleich erfordern, sind unter diesen Bedingungen nur eingeschränkt einsetzbar. Auch Wärmepumpensysteme, bei denen das Kältemittel vor Ort von Fachkräften gefüllt werden muss, scheiden aus.

Wärmepumpen haben heute i. d. R. Außenluft oder das Erdreich als Wärmequelle. Beide Systeme scheiden speziell in der innerstädtischen Sanierung insbesondere bei Mehrfamilienhäusern oft aus wegen der Geräuschbelastung (Luft-Wärmepumpe) oder nicht gegebene räumlicher oder geologischer Voraussetzungen für eine Erdsonde. Das Wärmepumpenheizsystem soll daher weder Erdarbeiten noch einen mechanischen Lüfter erfordern.

Das Wärmepumpenheizsystem soll mit möglichst hoher Effizienz, d. h. geringem Stromverbrauch betrieben werden können, d. h. mit minimierten, ideal ohne zusätzliche Wärmeübergänge zwischen Wärmequelle und Kältemittel sowie Kältemittel und Heiz- bzw. Kühlfläche arbeiten, d. h. ohne zusätzliche Wärmeträgerkreise auf Quellen- und Senkenseite.

Der Stromverbrauch vom Stromnetz soll insbesondere zu ungünstigen Zeiten (z. B. hohe Kosten oder hoher CO₂-Mix) minimiert und auf der Quellenseite soll im Winter solare Einstrahlung genutzt werden, was speziell an klaren kalten Tagen zu einer Erhöhung der Quelltemperatur gegenüber der Lufttemperatur führt. Weiterhin soll das System die optimale Nutzung von regenerativ erzeugtem Strom ermöglichen.

Die Wärmepumpe soll mit natürlichen Kältemitteln wie Propan oder (Iso-)Butan betrieben werden können, ohne Einschränkungen bzgl. Kältemittelmenge wegen Explosionsgefahr zu unterliegen.

Ein hoher Kostenfaktor bei Gebäuden mit geringem Heizbedarf stellt die Energiekostenabrechnung dar. Die hohen Fixpreise sind zudem kontraproduktiv für individuell sparsames Nutzerverhalten. Das Heizsystem soll daher für jede Wohn- bzw. Nutzereinheit einen eigenen Stromanschluss und eigene Regelmöglichkeiten ermöglichen.

Die Aufgabenstellung wird mit den Merkmalen des Anspruchs 1 sowie der Ansprüche 2-13 gelöst. Diese sehen Heiz- und ggf. kombinierte Kühlmodule (Temperierungseinheiten) vor, die außen auf die Fassade aufgebracht werden können. Sie werden im Rahmen der kompletten Dämmung der Fassade an Flächen angebracht, die dann beheizt werden und damit die Innenwand in eine Flächenheizung verwandeln.

Die Temperierungseinheiten stellen eine Wärmepumpe dar. Heizfall: die Kondensatorfläche zur Wärmeabgabe befindet sich auf der Innenseite - zur Gebäudewand hin - die Verdampferfläche befindet sich auf der Außenseite zur Umgebungsluft und Sonne hin. Die Außenseite wird von Solarstrahlung erwärmt und/oder entzieht der Umgebungsluft Wärme. Insbesondere bei wenig verschatteten Fassaden kann die Verdampferfläche kombiniert werden mit einem PV-Modul, wodurch gleichzeitig Strom produziert wird. In dieser Hinsicht entspricht der Aufbau dem SOLINK PVT-Wärmepumpenkollektor, vgl. Leibfried, U., Fischer, S., Asenbeck S.: PVT-Wärmepumpensystem SOLIN K - Systemvalidierung und zwei Jahre Praxiserfahrung, Symposium Thermische Solarenergie 2019, Bad Staffelstein, 21. - 23.06.2019 und WO 2018/033409 A1.

Die Temperierungseinheit stellt einen geschlossenen Kältekreis dar. Es werden keinerlei hydraulische Anschlüsse und Leitungen benötigt. Die Stromversorgung und insbesondere die Regelung der Einheiten erfolgen vorzugsweise von Innen. Auf diese Weise können die Elemente am Stromzähler der jeweiligen Wohnung angeschlossen werden und eine zentrale Energiekostenabrechnung entfällt. Jedes Element kann in seiner Leistung von Innen gesteuert werden, wie einzelne Heizkörper, so dass in verschiedenen Räumen unterschiedliche gewünschte Temperaturen eingestellt werden können.

Der Kältekreis ist für reversiblen Betrieb aufgebaut, so dass im Sommer damit die Innenseite (Fassade) gekühlt und an der Außenseite des Elements die Wärme abgegeben wird.

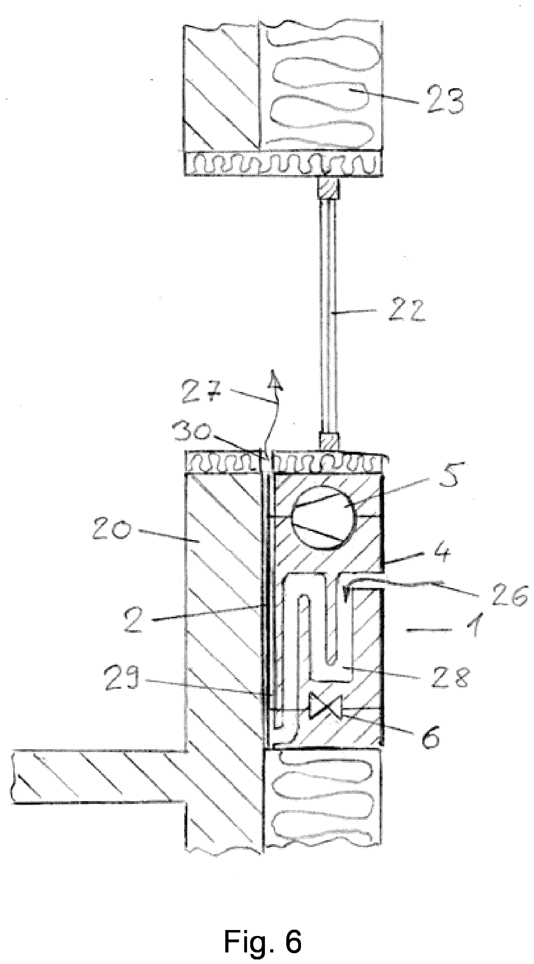

Bei gedämmten Gebäuden mit neuen gut isolierenden Fenstern entstehen im Heizfall die größten Wärmeverluste durch Lüftung, falls keine Anlage mit Wärmerückgewinnung vorhanden ist, d. h., durch kalte Zuluft, die für den Luftwechsel nötig ist. Statt die hierfür nötige Wärmeleistung vollständig durch die Wand zu übertragen, kann die Zuluft auch durch die Temperierungseinheiten geführt und erwärmt werden. Auf diese Weise wird die notwendige Heizleistung durch die Wand und damit die Heiztemperatur auf der Außenseite reduziert und die Reaktivität des Heizsystems erhöht. Hierzu wird ein Luftkanal (28 in Figur 6) von der Außenseite, wo kalte Zuluft 26 einströmt, zur Wandseite geführt. Dieser Luftkanal ist vorzugsweise siphoniert ausgeführt, um Wärmeverluste durch Konvektion von der Wand nach außen zu vermeiden. Auf der Wandseite ist ebenfalls ein Luftkanal 29 integriert, durch den die Zuluft in Kontakt zur inneren Wärmeübertragerstruktur 2 strömt - vorzugsweise von unten nach oben - und von dort als erwärmte Zuluft 27 durch die Lüftungsanlage in die Wohnung eingesaugt wird.

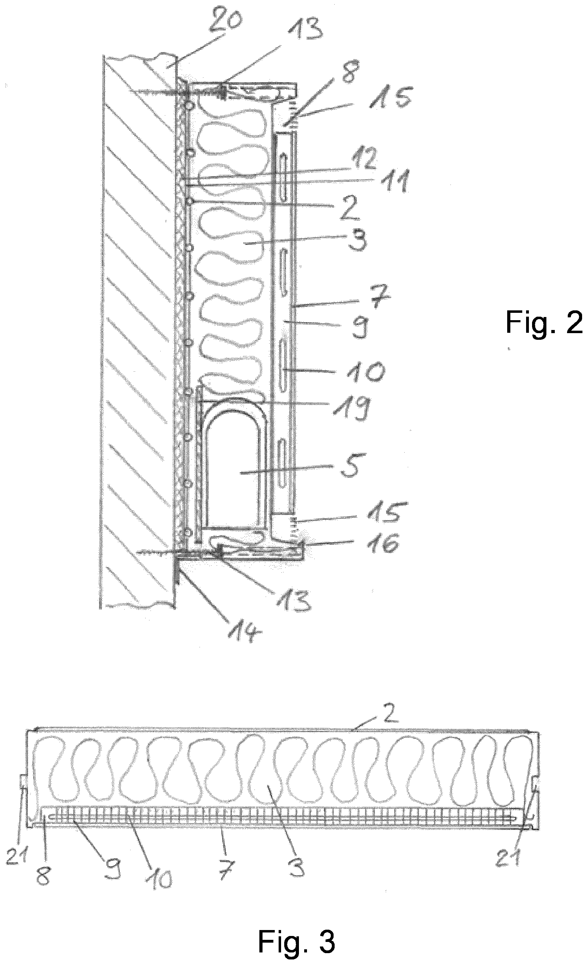

Der Luftkanal kann auf der Außenseite vom in Figur 2 dargestellten Luftkanal 8 oben abzweigen, und damit das Insektengitter 15 mit nutzen. Der Kanal kann durch die Temperierungseinheit so gelegt werden, dass die zu erwärmende Zuluft am Kompressor 5 der Wärmepumpe vorbeigeführt wird und auf diese Weise die Motorabwärme aufnimmt und nutzt und den Motor vor Überhitzung schützt. Ist die Siphonierung des Lufkanals zwischen Kompressor und innerer Wärmeübertragerstruktur 2 angebracht, so kann damit gleichzeitig die Schallübertragung nach Innen in die Wohnung vermieden werden.

Die Öffnung für die vorgewärmte Zuluft kann z. B. durch einen oder mehrere Schlitz(e) 30 auf der Innenseite hinter den Fenstern vorgesehen werden, um Mauerarbeiten zu vermeiden. Da im Rahmen der Montage der Temperierungseinheiten i. d. R. auch die Fenster ausgetauscht und die neuen dann in die Dämmebene gesetzt werden, ist die Realisierung solcher Schlitze einfach möglich. Die wandseitigen Luftkanäle der Temperierungseinheiten können oben miteinander verbunden werden, so dass erwärmte Luft in Einheiten, wo keine Fenster darüber sind, zu benachbarten Temperierungseinheiten, die unterhalb von Fenstern angebracht sind, strömen kann.

Die beschriebene Anordnung kann im Kühlfall auch zur Kühlung der Zuluft genutzt werden, wodurch die mögliche Kühlleistung erhöht wird, denn die Kühlung durch die Wand ist wegen Feuchtbildung bei zu starker Abkühlung begrenzt. Falls die Zuluft im Heizfall wie oben beschrieben vom Luftkanal 8 oben abzweigt und am Kompressor 5 vorbei zur Wandseite geführt wird, sollte sie im Kühlfall vom Luftkanal 8 unten abzweigend eingesaugt werden, und der Kompressor sollte nicht umströmt werden. Hierfür ist eine Umschaltklappe nötig. Alternativ hierzu kann die Außenluft an einer Stelle außerhalb des Luftkanals 8, wo sie weder abgekühlt noch aufgeheizt wird, angesaugt werden, dann kann dieser Luftkanal ohne Umschaltklappe sowohl zum Heizen als auch zum Kühlen genutzt werden.

Die Temperierungseinheiten werden vorzugsweise in verschiedenen Größen in Serie gefertigt. Bei den meisten Gebäuden geeignete Flächen, die mit Modulen mit standardisierten Abmessungen belegt werden können, sind die Bereiche bis zur Fensterhöhe. Alternativ ist es auch möglich, die Temperierungseinheit mit objektspezifischen Maßen zu fertigen, wie es für digitalisierte serielle Gebäudesanierung praktiziert wird, siehe oben.

Die Warmwassererwärmung kann in diesem System unabhängig von der Heizung z. B. in jeder Wohnung mit einem marktüblichen Warmwasserspeicher mit integrierter Abluft-Wärmepumpe geleistet werden. Die Abluftwärmepumpe kann in einem Innenraum, z. B. dem Badezimmer installiert sein und auf diese Weise die warme Luft aus den Außenräumen ansaugen und abgekühlt über die Badezimmer-Abluft nach außen abgeben. Damit können bei entsprechender Luftführung - z. B. Lüftungsöffnungen in Türen - auch Innenräume ohne Außenwand mit warmer Luft von den Außenräumen versorgt werden.

Zur Minimierung des Energieverbrauchs der Warmwasser-Wärmepumpe und damit der über die Temperierungseinheit zugeführten Energie können marktübliche Abwasser-Wärmerückgewinnungssysteme vorgesehen werden.

Bei erhöhtem Heizbedarf eines Innenraums, z. B. des Badezimmers, kann ggf. eine Zusatzheizung mit der Abluft-Wärmepumpe realisiert werden: z. B. ein Badezimmerheizkörper, der mit einer Zirkulationspumpe vom Warmwasser des Speichers bei Bedarf durchströmt wird.

Es ist auch möglich, die Temperierungseinheiten in Split-Bauweise auszuführen: Heiz- und Verdampferelement voneinander getrennt. Die Verbindung erfolgt mit einer dünnen flexiblen Leitung für das Kältemittel, z. B. Kupferrohr, wie bei Split-Wärmepumpen üblich. Wie ebenfalls üblich sollten die verbundenen Elemente bei Anlieferung an die Baustelle bereits mit Kältemittel gefüllt sein. Alternativ möglich ist die Befüllung nach der Montage. Eine solche Split-Lösung kann z. B. für Balkone oder Räume unterhalb von Dachschrägen oder Flachdächern eingesetzt werden. Bei Balkonen kann das Verdampferelement (Verdampfer im Winterbetrieb) an oder anstelle der Balkonbrüstung montiert werden. Auf Dächern kann dieses Element wie Solarkollektoren auf dem Dach und das gebäudeseitige Wärmeübertragerelement auf der Innenseite wie eine Wandflächenheizung angebracht werden.

Die Temperierungseinheiten können nicht nur im Sanierungsfall, sondern auch im Neubau eingesetzt werden.

Der erfindungsgemäße Aufbau kann unter anderem durch folgende, teilweise in den Figuren 1-5 dargestellten konkreten Ausgestaltungen realisiert werden.

Figur 1 zeigt schematisch einen möglichen Aufbau: Zwischen der Außenwand 20 eines Gebäudes und der Wärmedämmung 3 ist die innere Wärmeübertragungsstruktur 2 in Kontakt zur Außenwand zum Heizen oder Kühlen angebracht. Außen vor der Dämmung ist eine weitere Wärmeübertragungsstruktur 4 zur Wärmeaufnahme oder -abgabe angebracht. Beide Wärmeübertragerstrukturen 2, 4 sind als Kondensator und Verdampfer einer Wärmepumpe miteinander verbunden über einen Kompressor 5, ein Expansionsventil 6 und weiteren, nicht eingezeichneten Komponenten wie z. B. ein Vierwegeventil zur Kältekreisumkehr oder Pressostate. Diese Wärmepumpe und die Wärmedämmung 3 bilden zusammen die Temperierungseinheit 1. Weiterhin zeigt die Skizze beispielhaft ein Fenster 22 und die Wanddämmung 23.

Figur 2 zeigt, wie ein guter Kontakt zwischen innerer Wärmeübertragungsfläche und Wand bei gleichzeitiger leichter Demontagemöglichkeit der Temperierungseinheit ermöglichen wird:
Mit der Außenwand 20 ist eine dünne Blechplatte 11 (z. B. Aluminium) mit Klebemörtel 12 in dichtem Kontakt verbunden. Diese Platte kann bei der Montage über eine Vorrichtung flach und eben auf den Klebemörtel gepresst werden. Die Temperierungseinheit wird nach dem Aushärten montiert. Dabei wird die Wärmeübertragerstruktur 2 auf diese Fläche gut wärmeleitend, aber lösbar gedrückt.

Die Temperierungseinheit wird z. B. über Schrauben 13 und Dübel an die Wand geschraubt, wobei als Montagehilfe und zur Gewichtsaufnahme zuerst ein Winkel 14 unterhalb des Moduls montiert werden kann.

Die Fassadenmodule können mit Halte- bzw. Befestigungsmöglichkeiten ausgestattet sein, so dass sie von einer mobilen Arbeitsbühne aus demontiert und nach unten abgelassen werden können.

Der Aufbau der Temperierungseinheit kann ähnlich wie ein SOLINK PVT-Wärmepumpenkollektor (s. o.) gestaltet werden. Diese PVT-Kollektoren sind mit einem oberflächenvergrößernden Wärmeübertrager auf der Rückseite der PV-Module ausgestattet. Figur 2 zeigt Wärmeübertragerlamellen 9, die zwischen Wärmedämmung 3 und einer äußeren Fläche 7, vorzugsweise einem PV-Modul, angebracht sind. Sie verlaufen von oben nach unten und werden von einer mäanderförmigen Rohrleitung 10, die das Kältemittel enthält durchdrungen.

Dieser Aufbau bringt mehrere Vorteile mit sich:
- Der PVT-Kollektor kann aufgrund eines im Vergleich zu herkömmlichen PVT-Modulen deutlich besseren Wärmeübertragungsvermögens zur Umgebungsluft als einzige Wärmequelle für Wärmepumpen eingesetzt werden, d. h., wenn die Sonne nicht scheint, kann der Luft genügend Wärme bei hinreichend kleiner Temperaturdifferenz entzogen werden.
- Wenn die Sonne scheint, wird das PV-Modul über die Lamellen gekühlt (Ertragssteigerung) und diese Abwärme wird der Wärmepumpe zur Verfügung gestellt werden.
- Da das PV-Modul 7 über die Lamellen 9 thermisch angebunden ist, wird es durch die Wärmeträgerflüssigkeit nicht so stark gekühlt wie das in der Mitte der Lamellen verlaufende Rohr 10. Daher bilden sich bei tiefen Wärmeträgertemperaturen ausgehend von gefrierender Luftfeuchtigkeit keine Eisplatten am PV-Modul, die bei Kollektoren an Dach oder Fassade zu Personengefährdung führen können. Das an den Lamellen sich bildende Eis ist dagegen kleinteilig und ungefährlich.

Zwischen Fläche bzw. PV-Modul 7 und Wärmedämmung 3 wird durch den Wärmeübertrager ein Luftkanal 8 gebildet. In dem Kanal 8 stellt sich im Betrieb eine natürliche Konvektion von abgekühlter absinkender oder erwärmter aufsteigender Luft ein. Die Außenfläche bzw. das PV-Modul 7 bedecken dabei nicht die gesamte Höhe der Temperierungseinheit, sondern lassen oberhalb und unterhalb jeweils einen Spalt für die ein- und ausströmende Luft. Um das Eindringen von Schmutz und Insekten in den Bereich des Wärmeübertragers hinter der Fläche 7 zu vermeiden, sind die Öffnungen mit Gittern 15 verschlossen werden. Gleichzeitig soll der Luftwiderstand minimal sein. Diese Aufgabe kann durch Verwendung von Wabengitter, wegen Stabilität und Wetterbeständigkeit vorzugsweise aus Aluminium, erfüllt werden.

Der gesamte Verbund aus innerem und äußerem Wärmeübertrager 2, 4, Kompressor 5 und weiteren Wärmepumpenkomponenten, Dämmung 3, PV-Modul 7 sowie Wandbefestigungselementen soll auf der einen Seite eine kompakte stabile Einheit bilden, auf der anderen Seite sollen Wärmebrücken von Innen nach Außen vermieden werden. Dies kann mit einer Dämmung als geschäumte Formschale, wie in Figuren 2 und 3 gezeigt, erreicht werden, in die alle Elemente integriert werden können, durch eingeformte Clips oder integrierte, z. B. eingeschobene Befestigungselemente. Mögliche Schäume sind EPP, EPE oder EPS, insbesondere Neopor, das in der Baubranche für Fassadendämmungen eingesetzt wird. Zur direkten Kombination damit können passende Feder und Nuten (21 in Figur 3) eingeformt werden.

Um eine ausreichende Dämmwirkung an der Stelle des Kompressors 5 zu erreichen, ist in Figur 2 eine Vakuum-Dämmplatte 19 vorgesehen.

Im Heizbetrieb entsteht an den Wärmeübertrager- und ggf. PV-Flächen regelmäßig Kondensat. Abtropfendes Kondensat könnte zu Belästigung der Bewohner führen. Durch eine etwas überstehende Kante 16 an dem unteren Teil der Dämmschale 3 kann das Kondensat aufgefangen und abgeleitet werden. In der Dämmschale kann ein Ablaufkanal integriert sein, der z. B. durch Schlauchstücke mit den nächsten darunter liegenden Modulen verbunden werden, und ganz unten an geeigneter Stelle z. B. ins Erdreich geleitet werden kann (in Figuren 2 + 3 nicht eingezeichnet).

Figur 3 zeigt einen horizontalen Schnitt durch die Temperierungseinheit bei der einzelne Wärmeübertragerflächen 9, hier als Lamellen ausgestaltet, senkrecht (oder zumindest nicht parallel und flächig bedeckend) zur Außenfläche / dem PV-Modul 7 ausgerichtet sind. Die Wärmeübertragerstruktur befindet sich innerhalb des Kanals 8. Die Wärmeübertragerflächen 9 sind ebenfalls nicht in flächigem Kontakt zur Wärmedämmung 3 wodurch diese weniger gekühlt wird als es bei direktem Kontakt des vom Kältemittel durchströmten Teils des Wärmeübertragers 10 der Fall wäre, was die Wärmeverlustrate durch die Dämmung des Fassadenmoduls erhöhen würde.

Bauseits sollte sichergestellt werden, dass die aus der Temperierungseinheit unten ausströmende abgekühlte Luft nicht in das nächste Modul einströmt. Bei nur unter den Fenstern montierten Fassadenmodulen ist der Abstand zu den nächsten Modulen der tieferen Etage groß genug. Werden neben den Fenstern mehrere Module übereinander montiert, so kann bauseits ein möglichst großer Abstand vorgesehen werden. Weiterhin kann ggf. ein seitlicher Versatz der Module zueinander realisiert werden.

Andere Gestaltungen des Wärmeübertragers statt als Lamellen-Wärmeübertrager sind auch möglich, z. B. ähnlich wie bei Plattenheizkörpern oder Konvektoren oder im Rollbond-Verfahren hergestellte Wärmeübertrager.

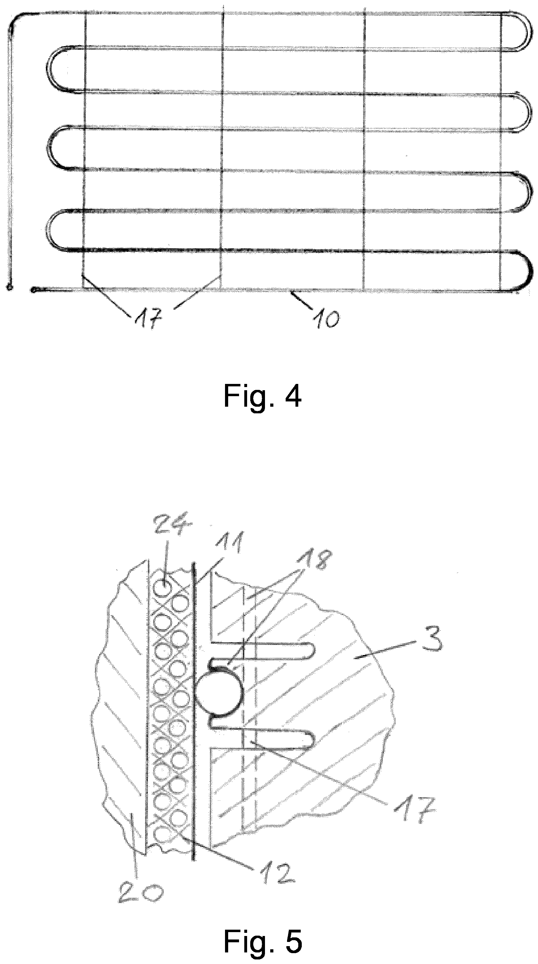

Figur 4 zeigt eine mögliche Ausführung des rückseitigen Wärmeübertragers 2: er ist hier ähnlich wie der Kondensator eines Kühlschranks mit einer Metallleitung 10, die mit aufgelöteten oder geschweißten Stegen 17 in Form gehalten werden, aufgebaut. Der Abstand der Stege ist groß, damit die Leitung 10 sich gut an eventuelle Unebenheiten des auf der Außenwand aufgebrachten Blechs 11 anpassen kann.

Figur 5 zeigt einen Ausschnitt der geschäumten Wärmedämmung 3: Sie beinhaltet Aufnahmen 18 für die Wärmeübertragerleitung 10 und die Stege 17, die so geformt sind, dass der Wärmeübertrager eingeclipst werden kann und im montierten Zustand der Temperierungseinheit mit einer gewissen Elastizität an das Blech 11 gepresst wird.

### Weitere Ausgestaltungen ohne Figuren:

Die Temperierungseinheiten sollten in ihrer Höhe und Breite zu gängigen Fassadenaufteilungen passen. Das bedeutet für das Höhenmaß ca. 80-110 cm, was unterhalb eines Fensters Platz hat. Bei 80 cm passen drei Einheiten übereinander in eine Geschosshöhe von 2,40 m. Mit 2-3 unterschiedlichen Breitenmaßen könnte eine gute Anpassung an unterschiedliche Fassadenmaße erfolgen, z. B. ca. 100 cm und 200 cm oder - entsprechend dem üblichen Rastermaß für Pfosten-Riegel-Fassaden: 62,5 cm / 125 cm und evtl. 250 cm. Ergänzend können Blindmodule mit gleicher Optik ggf. auf Maß gefertigt und angeboten werden. Für die unterschiedlich großen Temperierungseinheiten können innere und/oder äußere Wärmeübertragungsstruktur ggf. passend zur Größe der kleinsten Temperierungseinheit in großer Stückzahl gefertigt werden und für größere Einheiten in der Produktion zusammengesetzt und mit jeweils passendem Kompressor und ggf. weiteren Komponenten verarbeitet werden.

Die Oberfläche nach außen sollte bei in Serie produzierten Standardeinheiten nicht durch stark sichtbare Elemente strukturiert sein, damit diese nicht im Kontrast zur vorhandenen Fassadenstrukturierung durch Fenster o. ä. steht. Die PV-Module sollten daher eine möglichst homogene Oberfläche aufweisen, wie z. B. bei Dünnschicht- oder bei "all-black"-Modulen mit schwarzer Rückseitfolie der Fall. Es ist auch möglich, die Temperierungseinheiten aus architektonischen Gründen mit gefärbten PV-Modulen auszustatten.

Die Temperierungseinheiten können mit einem Energiemanagement so betrieben werden, dass der durch die Module selbst und/oder ansonsten z. B. durch auf dem Dach angebrachte PV-Module produzierte Strom so weit wie möglich direkt von dem System (und/oder sonstigen Hausverbrauchern) genutzt wird. Hierfür kann die Fassade als Speicherelement genutzt werden, so dass die Wärmeproduktion in gewissem Maße vom Bedarf entkoppelt werden kann: z. B. Aufheizen der Fassade tagsüber und Wärmeabgabe zeitversetzt abends.

PCM-Elemente (= Latentspeicher-Elemente) können mit der Temperierungseinheit thermisch gekoppelt werden. Insbesondere ist eine Kombination mit der inneren Wärmeübertragerstruktur und der Wand sinnvoll, um die Speicherkapazität der Wand und damit die Möglichkeiten der optimalen Betriebszeiten (Energiemanagement) zu verbessern. Eine Ausführungsmöglichkeit besteht darin, dass mit dem Klebemörtel PCM-Elemente aufgebracht werden. Entsprechende Putze mit integrierten PCM-Partikeln 24 sind Stand der Technik.

In einem Mehrfamilienhaus oder einem Gebäude mit mehreren z. B. gewerblichen Nutzungseinheiten ist es sinnvoll, alle PV-Module der Temperierungseinheiten und ggf. weitere PV-Module als eine zentrale PV-Anlage zu betreiben, statt den produzierten Strom den jeweiligen Wohnungen zuzuordnen. In jeder Wohnung können die ihr zugeordneten Temperierungseinheiten, d. h., der Heiz- und Kühlbetrieb, mit einem prädiktiven Energiemanagement-System zur Optimierung eines bestimmten Gütekriteriums betrieben werden, z. B. wie in der DE102016015503.5 und der GM202022000161 beschrieben.

Die Temperierungseinheiten können sowohl einstufig (an/aus) als auch mit einer Leistungsregelung betrieben werden. Aufgrund der i. d. R. geringen Heizleistung der einzelnen Einheiten und der Speicherkapazität der Gebäudewand ist ein einstufiger Betrieb ausreichend. Mehrere Wandmodule können abgestimmt so angesteuert werden, dass sich in der Gesamtheit eine kontinuierliche Leistungsregelung ergibt, die dafür sorgt, dass der am Gebäude produzierte Strom maximal genutzt und der Bezug von Netzstrom minimiert wird.

Die Temperierungseinheiten können auch mit Gleichstrom-Kompressoren wie sie für mobile Kühlschrankanwendungen angeboten werden, ausgestattet werden. Daher wäre auch der direkte Betrieb mit Gleichstrom von der PV-Anlage bzw. über eine Batterie gepuffert, die bei Bedarf vom Netz nachgeladen wird, möglich. Der Vorteil ist die direkte Nutzung des PV-Ertrag ohne Verluste durch einen Wechselrichter und die einfache Leistungsregelung und -anpassung ohne Aufwand und Verluste eines Inverters. In diesem Fall müsste die Stromabrechnung über Gleichstromzähler erfolgen - z. B. mit einem in jedem Modul integrierten Zähler und Datenübertragung über Funk, oder durch wohnungsweise Zuordnung. Vor allem in Neubauten, die mit einem Gleichstromnetz ausgestattet sind, ist diese Variante interessant.

Die Vorteile der Erfindung sind:
- Die Sanierung von Gebäudehülle und Wärmeerzeuger erfolgen mit der Temperierungseinheit gleichzeitig, ohne größere Arbeiten im Inneren des Gebäudes und ohne die Nutzung des Gebäudes im Inneren stärker zu beeinträchtigen. Das bisherige Heizsystem kann so lange in Betrieb bleiben, bis die Sanierung abgeschlossen ist.
- Durch die gleichzeitige Installation eines Heiz- bzw. Kühlsystems und der Wärmedämmung ist die Wirtschaftlichkeit im Vergleich zu getrennten Maßnahmen für Gebäudedämmung und Heizungserneuerung insbesondere mit Flächenheizungen extrem gut.
- Die Temperierungseinheit kann auch von angelernten Kräften fehlerfrei eingesetzt werden. Es besteht keine Erfordernis der Verlegung von Leitungen, des Befüllens, Spülens, Entlüftens und des hydraulischen Abgleichs, oder des Füllens von Kältemittel vor Ort.
- Die Temperierungseinheit erfordert weder Erdarbeiten noch einen mechanischen Lüfter.
- Die Temperierungseinheiten können auch zur Temperierung (Kühlung) im Sommer genutzt werden.
- Die Wärmepumpen der Temperierungseinheiten arbeiten mit direkten Wärmeübergängen zwischen Wärmequelle und Kältemittel sowie Kältemittel und Heiz- bzw. Kühlfläche und damit mit minimierten Temperaturverlusten bzw. maximaler Effizienz.
- Die Wärmepumpe der Temperierungseinheiten kann mit natürlichem Kältemittel mit geringem Treibhausgaspotential und hoher Effizienz betrieben werden, ohne Einschränkungen wegen Explosionsgefahr in geschlossenen Räumen.
- Auf der Quellenseite wird solare Einstrahlung genutzt mit bestem Einfallswinkel im Winter, was speziell an klaren kalten Tagen zu einer Erhöhung der Quelltemperatur gegenüber der Lufttemperatur führt.
- Nach erster Abschätzung produziert das System über die integrierten PV-Module in der Jahresbilanz den Strom, den es verbraucht. Dabei erfolgt durch die steile Ausrichtung der PV-Module die maximale PV-Stromproduktion bei tiefsehender Wintersonne, wenn auch der Energiebedarf für die Heizung am größten ist, was zu einer minimierten Belastung des Stromnetzes führt.
- Die Nutzung der Außenwand als kostenlose Speicherkapazität ermöglicht ein Lastmanagement zum Ausgleich von Stromproduktion und Heiz- bzw. Kühlbedarf und zur optimierten direkten Nutzung des selbst produzierten Stroms.
- Ein Energiemanagement mit aufeinander abgestimmt optimiertem Betrieb der einzelnen Wohnungs- bzw. Nutzeinheiten führt zur maximalen Eigenversorgung des Hauses und minimierten Energiekosten.
- Aufgrund der vom System selbst produzierten Antriebsenergie und des zu erwartenden vergleichsweise hohen Deckungsgrads auch im Winter besteht eine verglichen mit herkömmlichen Heizsystemen erhöhte Versorgungssicherheit.
- Die Vielzahl an jeweils unabhängig funktionierenden Temperierungseinheiten sorgt ebenfalls für eine erhöhte Versorgungssicherheit, da es unwahrscheinlich ist, dass mehrere/alle Einheiten gleichzeitig ausfallen.
- Das System ist für jede Wohneinheit und bei Bedarf jeden Raum individuell steuerbar, d. h., für graduelle und räumlich variable Heiz- bzw. Kühlleistung.
- Die Temperierungseinheiten können für jede Wohn- bzw. Nutzereinheit über einen eigenen Stromanschluss und eigene Regelmöglichkeiten angeschlossen werden wodurch sich eine zentrale Heizkostenabrechnung erübrigt und ein energiebewusstes Nutzerverhalten gefördert wird.
- Die Temperierungseinheiten führen, wenn sie nur oder in erster Linie zum Heizen eingesetzt werden, zur Behebung von evtl. Feuchte- und Schimmelproblemen in den entsprechenden Gebäuden, da die komplette Wand von außen erwärmt wird. Insbesondere in Verbindung mit einer vorgeschlagenen Abluft-Wärmepumpe für die Warmwasserbereitung wird das Wohnraumklima deutlich verbessert.
- Es besteht keine Notwendigkeit der Taupunktberechnung für jedes zu sanierende Gebäude.

### Bezugszeichenliste

- 1: Temperierungseinheit
- 2: innere Wärmeübertragerstruktur in Kontakt zur Außenwand
- 3: Wärmedämmung
- 4: äußere Wärmeübertragerstruktur zur Außenluft und ggf. Solarabsorption
- 5: Kompressor
- 6: Expansionsventil
- 7: Außenfläche des äußeren Wärmeübertragers, ggf. Photovoltaikmodul
- 8: Luftkanal auf Innenseite des äußeren Wärmeübertragers
- 9: oberflächenvergrößernde Elemente des Wärmeübertragers
- 10: das Kältemittel beinhaltender Bereich der Wärmeübertragerstruktur, z. B. Metallleitung
- 11: wärmeleitende Fläche, z. B. Aluminiumblech
- 12: Klebemörtel
- 13: Befestigungselemente, z. B. Schrauben mit Dübel
- 14: Auflagewinkel
- 15: Gitter
- 16: Kante zum Vermeiden abtropfenden Kondensats
- 17: Stege zur Fixierung der Leitungen des inneren Wärmeübertragers
- 18: Aufnahmen in Dämmung zur Fixierung des inneren Wärmeübertragers
- 19: Vakuum-Dämmplatte
- 20: Außenwand des Gebäudes
- 21: Nut/Feder in Dämmung der Temperierungseinheit
- 22: Fenster
- 23: Standard-Wanddämmung
- 24: PCM-Elemente
- 26: Außen-Zuluft
- 27: erwärmte Zuluft
- 28: Luftkanal innerhalb der Dämmung der Temperierungseinheit
- 29: Luftkanal an innerer Wärmeübertragerstruktur
- 30: Schlitz

## Patentansprüche

1. System zur Reduzierung und Deckung des Heiz- und Kühlbedarfs von Gebäuden über die Außenwand (20) eines Gebäudes, aufweisend mindestens eine Temperierungseinheit (1) bestehend aus einer inneren Wärmeübertragungsstruktur (2), die im montierten Zustand in Kontakt zur Außenwand (20) steht, einer zweiten äußeren Wärmeübertragerstruktur (4), die im Freien angebracht ist zum Wärmeaustausch mit Außenluft und zur Erwärmung durch Solarstrahlung, wobei die zweite Wärmeübertragerstruktur (4) photovoltaische Flächen beinhalten kann, sowie weiteren Komponenten die in der Gesamtheit eine Wärmepumpe bilden, wobei im Heizfall die innere Wärmeübertragungsstruktur (2) die wärmeabgebende Seite darstellt und im Kühlfall die wärmeaufnehmende Seite, bestehend weiterhin aus einer Wärmedämmung (3), die vor der Wärmeübertragerstruktur (2) angebracht ist, so dass sich die innere Wärmeübertragungsstruktur (2) sich zwischen Außenwand (20) und Wärmedämmung (3) befindet, **dadurch gekennzeichnet, dass** ein Luftkanal (28) von der Außenseite mindestens einer Temperierungseinheit (1), zur Seite der Außenwand (20) führt, durch den Zuluft (26, 27) für die beheizten bzw. gekühlten Räume des Gebäudes geführt und in der Temperierungseinheit (1) erwärmt bzw. im Kühlbetrieb abgekühlt werden kann, bevor sie durch eine oder mehrere Öffnung(en) (30) in die Räume strömt.

2. System zur Reduzierung und Deckung des Heiz- und Kühlbedarfs von Gebäuden nach Anspruch 1, **dadurch gekennzeichnet, dass** die mit einer Leitung verbundenen Wärmeübertragerstrukturen (2, 4) wahlweise räumlich voneinander getrennt sind, so dass die Wärmeübertragertruktur (4) separat montiert wird - z. B. an oder anstelle einer Balkonbrüstung - oder der gesamte Verbund aus innerem und äußerem Wärmeübertrager (2, 4) und weiteren Wärmepumpenkomponenten, Dämmung (3) sowie ggf. PV-Modul (7) eine kompakte funktionsfähige dämmende Einheit bilden.

3. System zur Reduzierung und Deckung des Heiz- und Kühlbedarfs von Gebäuden nach einem der Ansprüche 1 bis 2, **dadurch gekennzeichnet, dass** der Luftkanal (28) siphoniert ist und die Zuluft (26, 27) im Kontakt zur inneren Wärmeübertragerstruktur (2) erwärmt bzw. abgekühlt werden kann.

4. System zur Reduzierung und Deckung des Heiz- und Kühlbedarfs von Gebäuden nach einem der Ansprüche 1 bis 3, **dadurch gekennzeichnet, dass** die erwärmte Zuluft (27) durch Schlitz(e) (30) auf der Innenseite hinter den Fenstern (22) strömen kann.

5. System zur Reduzierung und Deckung des Heiz- und Kühlbedarfs von Gebäuden nach einem der Ansprüche 1 bis 4, **dadurch gekennzeichnet, dass** mehrere Temperierungseinheiten (1) so miteinander verbunden werden können, dass erwärmte Luft (27) in Einheiten, wo keine Fenster (22) darüber sind, zu benachbarten Temperierungseinheiten (1), die unterhalb von Fenstern angebracht sind, strömen kann.

6. System zur Reduzierung und Deckung des Heiz- und Kühlbedarfs von Gebäuden nach einem der Ansprüche 1 bis 5, **dadurch gekennzeichnet, dass** die zu erwärmende Zuluft (26) am Kompressor (5) der Wärmepumpe vorbeigeführt wird und auf diese Weise die Motorabwärme aufnimmt.

7. System zur Reduzierung und Deckung des Heiz- und Kühlbedarfs von Gebäuden nach einem der Ansprüche 1 bis 6, **dadurch gekennzeichnet, dass** die Zuluft (27) durch die Lüftungsanlage einer Wohnung des Gebäudes durch die mindestens eine Temperierungseinheit (1) in die Wohnung gesaugt wird.

8. System zur Reduzierung und Deckung des Heiz- und Kühlbedarfs von Gebäuden nach einem der Ansprüche 1 bis 7, **dadurch gekennzeichnet, dass** eine Abluft-Wärmepumpe in einem Innenraum, z. B. dem Badezimmer, installiert ist, und die warme Luft aus den Außenräumen mit Außenwand (20) ansaugt und abgekühlt über die Abluft nach außen abgibt, wobei zusätzlich zur Warmwassererwärmung eine Zusatzheizung für Innenräume mit der Abluft-Wärmepumpe realisiert werden kann.

9. System zur Reduzierung und Deckung des Heiz- und Kühlbedarfs von Gebäuden nach einem der Ansprüche 1 bis 8, **dadurch gekennzeichnet, dass** die äußere Wärmeübertragerstruktur (4) mit einer Fläche (7) nach außen abschließt, hinter der sich ein Kanal (8) für abgekühlte absinkende oder erwärmte aufsteigende Luft befindet, wobei die Luft in gutem Kontakt zur Wärmeübertragungsstruktur (4) steht.

10. System zur Reduzierung und Deckung des Heiz- und Kühlbedarfs von Gebäuden nach einem der Ansprüche 1 bis 9, **dadurch gekennzeichnet, dass** die äußere Wärmeübertragerstruktur (4) mit oberflächenvergrößernden Elementen (9) innerhalb des Luftkanals versehen ist.

11. System zur Reduzierung und Deckung des Heiz- und Kühlbedarfs von Gebäuden nach einem der Ansprüche 1 bis 10, **dadurch gekennzeichnet, dass** der das Kältemittel beinhaltende Bereich (10) der Wärmeübertragerstruktur (4) weder in direktem Kontakt zur Außenfläche (7) noch zur Wärmedämmung (3) bzw. die Wärmedämmung umschließenden Fläche steht.

12. System zur Reduzierung und Deckung des Heiz- und Kühlbedarfs von Gebäuden nach einem der Ansprüche 1 bis 11, **dadurch gekennzeichnet, dass** das System Temperierungseinheiten (1) in Standardgrößen beinhaltet, die an Flächen angebracht werden, die beheizt werden, sowie Wanddämmung (23) oder Blindmodule zur kompletten Dämmung der Fassade.

13. System zur Reduzierung und Deckung des Heiz- und Kühlbedarfs von Gebäuden nach einem der Ansprüche 1 bis 12, **dadurch gekennzeichnet, dass** die Temperierungseinheit (1) wärmebrückenfrei mit einer Wärmedämmung (3) als geschäumte Formschale realisiert ist, in die durch entsprechende Aufnahmen, eingeformte Clipse etc. alle Elemente integriert sind und optional Federn und Nuten (21) zur dichten Verbindung der Einheiten untereinander und mit herkömmlichen Fassaden-Dämmblöcken eingeformt sein können.

14. System zur Reduzierung und Deckung des Heiz- und Kühlbedarfs von Gebäuden nach einem der Ansprüche 1 bis 13, **dadurch gekennzeichnet, dass** die Wand (20) mit einer wärmeleitenden Fläche (11), z. B. Blech, in dichtem Kontakt verbunden ist, z. B. durch Klebemörtel (12), und dass die Wärmeübertragerstruktur (2) im montierten Zustand der Temperierungseinheit mit dieser Fläche gut wärmeleitend, aber lösbar in Kontakt steht.

15. System zur Reduzierung und Deckung des Heiz- und Kühlbedarfs von Gebäuden nach einem der Ansprüche 1 bis 14, **dadurch gekennzeichnet, dass** PCM-Elemente (24) mit der Temperierungseinheit thermisch gekoppelt sind indem sind indem sie in den Wandaufbau, insbesondere zwischen Wand (20) und Wärmeübertragerstruktur (2) integriert sind.
